(19) Europäisches Patentamt
European Patent Office
Office européen des brevets

(11) EP 0 757 699 B1

(12) FASCICULE DE BREVET EUROPEEN

(45) Date de publication et mention de la délivrance du brevet:
**07.01.1998 Bulletin 1998/02**

(21) Numéro de dépôt: **94915196.3**

(22) Date de dépôt: **29.04.1994**

(51) Int Cl.$^6$: **C08F 18/24**, C08F 218/00, G02B 1/04

(86) Numéro de dépôt international:
**PCT/FR94/00498**

(87) Numéro de publication internationale:
**WO 95/29941 (09.11.1995 Gazette 1995/48)**

(54) **Compositions polymères allyliques à faible indice de jaune, compositions polymérisables et lentilles les mettant en oeuvre**

Allylpolymere enthaltende Zusammensetzungen mit niedrigem Gelbindex, polymerisierbare Zusammensetzungen und Linsen

Low yellow index allylic polymer compositions, polymerizable compositions and lenses made of said compositions

(84) Etats contractants désignés:
**DE ES GB IT**

(43) Date de publication de la demande:
**12.02.1997 Bulletin 1997/07**

(73) Titulaire: **ESSILOR INTERNATIONAL (Compagnie Générale d'Optique)**
**F-94220 Charenton-le-Pont (FR)**

(72) Inventeurs:
- **GARCIA, Ruben**
  **F-92240 Malakoff (FR)**
- **KEITA, Gabriel**
  **F-92400 Courbevoie (FR)**
- **YEAN, Leanirith**
  **F-91160 Longjumeau (FR)**

(74) Mandataire: **Casalonga, Axel**
**BUREAU D.A. CASALONGA - JOSSE**
**Morassistrasse 8**
**80469 München (DE)**

(56) Documents cités:
**EP-A- 0 224 123** **WO-A-89/10915**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 757 699 B1

Printed by Jouve, 75001 PARIS (FR)

## Description

La présente invention a pour objet de nouvelles compositions polymères allyliques destinées à être utilisées pour la fabrication de lentilles ophtalmiques et aux lentilles ophtalmiques et à leur utilisation dans le domaine de l'ophtalmique et du matériel utilisant des lentilles telles que des viseurs, des optiques de caméras.

Les verres ophtalmiques obtenus à partir de matériaux allyliques dérivés du bisphénol A sont en général trop jaunes pour pouvoir être utilisés.

L'utilisation d'additifs, tels que le cyclohexene et ses dérivés pour réduire le taux de jaune est connue et décrite dans le brevet US P 4,959,429.

Les lentilles ophtalmiques peuvent être obtenues sous leur forme définitive par coulée de compositions polymérisables entre deux moules présentant des géométries de surface requises puis polymérisation. On obtient alors une lentille dont les deux faces se trouvent dans leur état final.

Dans le but de réduire les stocks de lentilles ophtalmiques, il est fréquent de fabriquer des lentilles semi-finies comportant, après moulage une seule face à sa géométrie finale, la deuxième face pouvant alors être surfacée à la demande.

L'opération de surfaçage de la seconde face provoque une augmentation de la température de la lentille semi-finie et il est indispensable que le polymère constituant cette lentille soit suffisamment rigide et non déformable à la température atteinte. Le polymère doit de ce fait posséder de bonnes propriétés thermomécaniques.

La demanderesse a découvert, ce qui fait l'objet de l'invention, qu'en utilisant pour réaliser le polymère destiné à la fabrication de lentilles ophtalmiques, conformes à l'invention, une composition copolymérisable comprenant au moins un monomère de formule

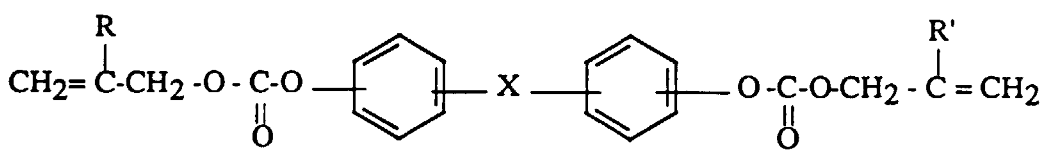

(I)

et un monomère dérivé de l'alcool allylique, il était possible de préparer des polymères présentant à la fois de bonnes propriétés thermomécaniques et un indice de jaune faible, les rendant particulièrement appropriés pour leur utilisation dans la fabrication de lentilles ophtalmiques.

Les monomères de formule (I) sont connus en eux-mêmes et sont décrits dans le brevet USP 4,959,429. Ils sont mis en oeuvre pour la préparation de polymères utilisables dans le domaine ophtalmique.

L'invention a pour objet les polymères constitués de motifs dérivant de monomères de formule (I) et de dérivés d'alcool allylique.

Un autre objet de l'invention est constitué par les compositions polymérisables comprenant les monomères de formule (I) et les dérivés d'alcool allylique.

L'invention a également pour objet les verres ophtalmiques obtenus grâce à l'utilisation de ces polymères et à leur utilisation dans le domaine de l'optique ophtalmique et dans des appareils mettant en oeuvre des optiques.

D'autres objets de l'invention apparaîtront à la lecture de la description et des exemples qui suivent.

La composition polymère qui fait l'objet de l'invention est essentiellement caractérisée par le fait qu'elle est obtenue par polymérisation d'une composition polymérisable comprenant :

(A) un composant A comprenant: au moins 50 % en poids et de préférence 70 à 100 % en poids d'un monomère ou d'un mélange de monomères de formule (I) :

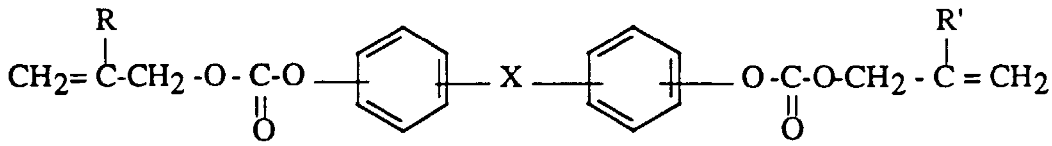

(I)

dans laquelle X désigne O, S, CO, $SO_2$, $-CH_2-$, -CH = CH- ou

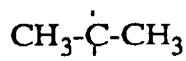

et R et R' sont choisis parmi H et $CH_3$

0 à 50 % en poids d'un ou plusieurs comonomère(s) allyllique(s), vinylique(s), acrylique(s) ou méthacrylique(s) mono-ou polyfonctionnel(s) (II)

(B) un composant B présent dans des proportions de 0,2 à 10 % et de préférence 0,3 à 5 % en poids par rapport au poids des monomères (I) et (II) et comprenant des monomères de formule (III)

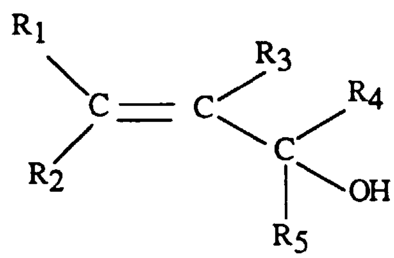

(III)

dans laquelle

$R_4$ et $R_5$ désignent hydrogène ou l'un des groupements $R_4$ et $R_5$ désigne hydrogène tandis que l'autre forme avec le groupement $R_2$ un cycle en $C_5$ ou en $C_7$-$C_{10}$ éventuellement substitué par un ou plusieurs groupement(s) alkyle en $C_1$-$C_4$, linéaire(s) ou ramifié(s);

$R_1$, $R_2$ $R_3$ désignent indépendamment l'un de l'autre hydrogène ou un groupement alkyle en $C_1$-$C_6$, pouvant être substitué par un ou plusieurs groupement(s) OH, et dont la chaîne peut éventuellement être interrompue par un ou plusieurs groupement(s) ether, ester ou cétonique, $R_2$ pouvant former un cycle en $C_5$ ou en $C_7$-$C_{10}$ éventuellement substitué par un ou plusieurs groupement(s) alkyle en $C_1$-$C_4$ linéaire(s) ou ramifié(s) avec l'un des groupements $R_4$ et $R_5$.

Conformément à l'invention, le radical alkyle en $C_1$-$C_6$ désigne de préférence un groupement méthyle ou éthyle. Parmi les monomères de formule (I) ceux ayant la structure suivante sont particulièrement préférés :

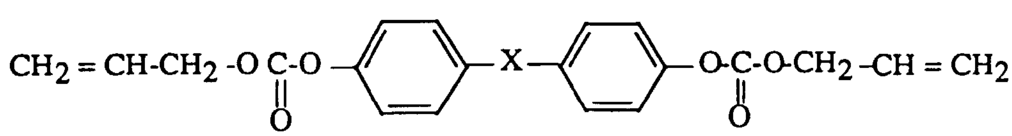

(I')

dans lequel X a les mêmes significations indiquées ci-dessus.

Pour les monomères de formule (III), les significations préférées sont celles dans lesquelles $R_4$ et $R_5$ désignent

hydrogène.

Pour les monomères de formule (III), les significations particulièrement préférées sont celles dans lesquelles $R_3$, $R_4$ et $R_5$ désignent hydrogène; $R_1$ désigne hydrogène, méthyle ou propyle; $R_2$ désigne hydrogène, méthyle, éthyle ou propyle.

Les monomères de formule (m) plus particulièrement préférés conformément à l'invention sont l'alcool crotylique, le cis 2-hexène 1-ol, le trans 2-hexène 1-ol, le cis 2-pentène 1,-ol, le 3-méthyl 2-butène 1-ol.

Les polymères préférés sont ceux pour lesquels le monomère de formule (I) est le diallylcarbonate de 4,4'-(1-méthyléthylidène)bis (phénol) ou diallylcarbonate de bisphénol A.

Les monomères (II) peuvent être aromatiques ou non aromatiques.

Parmi les composés aromatiques monofonctionnels, on peut citer le phényl (méth)acrylate, le benzyl(méth)acrylate, le phénoxyéthyl(méth)acrylate, le styrène.

Parmi les composés non aromatiques, on peut utiliser de façon préférentielle un alkyl(méth)acrylate monofonctionnel tel que le méthyl(méth)acrylate, l'éthyl(méth)acrylate, le butyl(métha)crylate, l'isobutyl(méth)acrylate ou les dérivés difonctionnels tels que le butanedioldi(méth)acrylate ou trifonctionnel tel que le triméthylolpropane tri(méth)acrylate.

Parmi les composés allyliques on peut citer les diallylcarbonates de glycols notamment :
le di(2-chloroallylcarbonate) d'éthylèneglycol; le diallylcarbonate de diéthylèneglycol; le diallylcarbonate de 1,4-butanediol; le diallylcarbonate de 1,5 -pentanediol; le di(2-méthallylcarbonate) de diéthylèneglycol; le diallylcarbonate de diéthylèneglycol; le diallylcarbonate de triéthylèneglycol; le di(2-éthylallylcarbonate) de propylèneglycol; le diallylcarbonate de 1,3-propanediol; le di(2-bromoallylcarbonate de 1,4-butanediol; le diallylcarbonate de dipropylèneglycol; le di(2-éthylallycarbonate) de triméthylèneglycol et le diallycarbonate de pentanethylèneglycol.

On utilise plus particulièrement le monomère diallylcarbonate de diéthylèneglycol vendu sous la dénomination commerciale CR-39® Allyl Diglycol Carbonate par la Société PPG INDUSTRIES INC.

La polymérisation s'effectue de façon connue en soi par réalisation d'un mélange primaire contenant les différents monomères de la composition polymérisable.

Les monomères de formule (III) sont ajoutés aux monomères (I) et (II) dans des proportions comprises entre 0,2 et 10 % en poids par rapport au poids des monomères de formule (I) et (II).

La réaction de polymérisation peut être catalysée par des catalyseurs tels que le peroxyde de benzoyle, le peroxydicarbonate de cyclohexyle, le peroxydicarbonate de di-isopropyle, le 2,2'-azobis isobutyronitrile. Les catalyseurs sont utilisés dans des quantités suffisantes pour amorcer ou maintenir la polymérisation et sont généralement comprises entre 0,005 et 6 % en poids par rapport au poids total de la composition à polymériser.

Les lentilles ophtalmiques sont préparées plus particulièrement en introduisant la composition souhaitée contenant les différents monomères précités dans un système constitué par un moule bi-plan en verre et l'on soumet l'ensemble à un cycle thermique de polymérisation évoluant sur une durée de 10 à 20 heures, d'environ 25°C à 90°C et de préférence d'environ 25 à 85°C. Il est également possible de procéder à une polymérisation par voie photochimique.

Le polymère sous forme de lentille ainsi obtenu est ensuite soumis à un recuit à une température et pendant une durée suffisante pour éliminer les contraintes résiduelles dans la lentille. La température est généralement comprise entre 50 et 120°C et le recuit s'effectue pendant environ 1 à 20 heures.

Il est également possible de procéder à la polymérisation dans des moules dont l'un comporte une face à la géométrie finale de la lentille et une deuxième face qui elle n'est pas réglée en fonction de la géométrie de la surface de la lentille finale mais permet de préparer une seconde face qui peut être surfacée à la demande.

L'invention a également pour objet la composition polymérisable telle que définie ci-dessus, dans son application à la préparation de compositions polymères.

Les polymères ainsi obtenus notamment à la suite du moulage peuvent être utilisés pour la réalisation d'éléments ophtalmiques tels que des lentilles ophtalmiques, des verres de lunettes ou pour des lentilles utilisées dans des objectifs et des viseurs, des optiques d'appareils divers tels que appareil photo, caméra, microscope.

La détermination de l'indice de jaune est effectuée par voie spectroscopique et visuelle. Pour la voie spectroscopique, on utilise une méthode standardisée (ASTM D-1925-63), d'indice de jaune est défini de la façon suivante :

$$Yi = \frac{(127{,}5\ X - 105.{,}8\ Z)}{Y}$$

où X, Y, Z sont les coordonnées trichromatiques de l'échantillon, mesuré par spectrophotomètre UV visible sur l'ensemble du spectre entre 380 et 780 nanomètres. La valeur Yi est donnée après recuit.

Par voie visuelle on détermine 4 étalons de verre contenant des quantités croissantes de colorant jaune pour établir une gamme de jaunes et on classe les échantillons suivant leurs niveaux de jaune respectifs.

Le taux de conversion est déterminé par dosage de la double liaison de la fonction allylique en proche infrarouge en suivant l'aire de la bande à 6160 $cm^{-1}$ qui est caractéristique de la première harmonique de la vibration de la liaison

CH du méthylène terminal. Le taux de conversion est exprimé de la façon suivante :

$$p = \frac{\text{Aire } (t = 0)\text{-Aire } (t)}{\text{Aire } (t = 0)}$$

Les exemples suivants sont destinés à illustrer l'invention sans pour autant présenter un caractère limitatif.

On prépare dans chaque cas un mélange primaire par homogénéisation, pendant une heure des quantités de diallylcarbonate de bisphénol A commercialisé par la Société PPG INDUSTRIES INC sous la dénomination CR 73® ou HIRI 1® et éventuellement de monomère (II) diallylcarbonate de diéthylèneglycol vendu sous la dénomination CR 39® Allyl Diglycol Carbonate par la Société PPG INDUSTRIES INC. Le mélange est catalysé avec du peroxydicarbonate de cyclohexyle ou d'isopropyle.

Les dérivés d'alcools allylique de formule (III) ont été introduits dans des proportions indiquées ci-dessous tout juste avant la coulée dans un système constitué de deux moules bi-plans en verre et d'un joint en EVA (copolymère éthylène/acétate de vinyle).

L'ensemble subit alors un cycle thermique de 19 heures consistant à partir d'une température de 25°C pour arriver au bout de 17 heures à une température de 85°C.

Les produits polymérisés ainsi obtenus sont recuits pendant une durée pouvant varier de 1 à 20 heures à des températures de 50 à 120°C généralement puis on en détermine les caractéristiques.

Exemple I

On utilise du diallylcarbonate de bisphenol A commercialisé par la société PPG INDUSTRIES INC sous la dénomination CR 73® ou HIRI 1®. On catalyse ce monomère avec 4 % en poids de peroxydicarbonate de cyclohexyle. On introduit auparavant dans le monomère CR73® un composé répondant à la formule

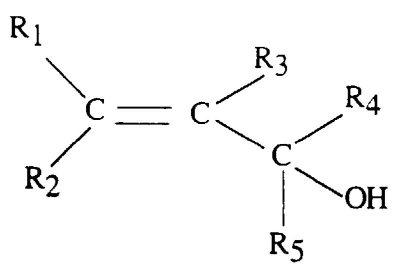

(III)

dans laquelle $R_1$, $R_2$, $R_3$, $R_4$, $R_5$ ont les significations indiquées dans le tableau ci-dessous :

Tableau I

| Additifs | $R_1$ | $R_2$ | $R_3$ | $R_4$ | $R_5$ | % massique additif | Yi (105/10) | P |
|---|---|---|---|---|---|---|---|---|
| cyclohexene (ref.) | | | | | | 0,96 | 2,90 | 66,5 |
| crotyl alcool | $CH_3$ | H | H | H | H | 0,97 | 1,86 | 64.1 |
| t-2-hexen-1-ol | $C_3H_7$ | H | H | H | H | 0,96 | 2,12 | 64,4 |
| c-2-hexen-1-ol | H | $C_3H_7$ | H | H | H | 0,96 | 2,02 | 64,1 |
| c-2-penten-1-ol | H | $C_2H_5$ | H | H | H | 0,97 | 2,30 | 61,0 |
| methyl-3-buten-1-ol | $CH_3$ | $CH_3$ | H | H | H | 0,98 | 2,11 | 62,5 |

La référence est un mélange de CR73® et de cyclohexene Yi est l'indice de jaune et p est le taux de conversion.

On constate dans chacun des ces essais que l'indice de jaune est inférieur à celui de la référence.

Exemple 2

On prépare une composition polymérisable comprenant 88,4 parties en poids du produit vendu sous la dénomination HIRI1® (CR73®) par la societé PPG, de 7,98 parties en poids de carbonate d'allyldiglycol vendu sous la dénomination (CR39®) par la même société (PPG), de 0,97 parties d'additif et de 0,05 partie d'absorbeur UV 5411. On catalyse ce mélange avec 2,6 % en poids de peroxydicarbonate d'isopropyle (PIP).
On regroupe les résultats en fonction des deux additifs utilisés dans le tableau suivant :

Tableau 2

| réf " | Additifs | % massique additif | Yi(160/10) | P |
|---|---|---|---|---|
| | cyclohexene (ref.) | 0,97 | 3,69 | 60 |
| | cyclohexene (ref) | 0,97 | 3,42 | 60 |
| | crotyl alcool | 0,97 | 2,34 | 60 |
| | crotyl alcool | 0,97 | 2,41 | 60 |

On constate que l'indice de jaune est inférieur à celui de la référence.

## Revendications

1. Composition polymère caractérisée par le fait qu'elle résulte de la polymérisation d'une composition polymérisable comprenant :

(A) un composant A comprenant : au moins 50 % en poids d'un monomère ou d'un mélange de monomères répondant à la formule I

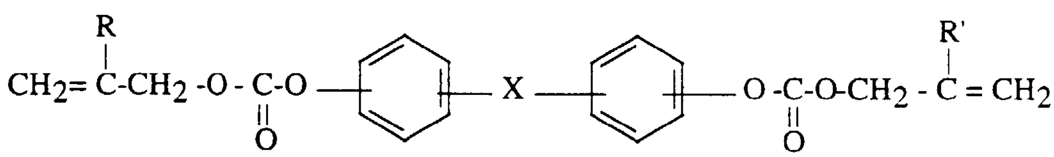

(I)

dans laquelle
X désigne
O,S, $SO_2$, -CO,-$CH_2$-, -CH=CH- ou

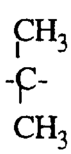

et R et R' sont choisis parmi H et $CH_3$ ;
0 à 50 % en poids d'un ou plusieurs comonomère(s) allylique(s) vinylique(s), acrylique(s) ou méthacrylique(s) mono ou poly fonctionnel(s) (II)
(B) un composant B comprenant de
0,2 à 10 % en poids, de préférence 0,3 à 5 % en poids par rapport au poids des composants (I) et (II), d'un composé de formule (III) :

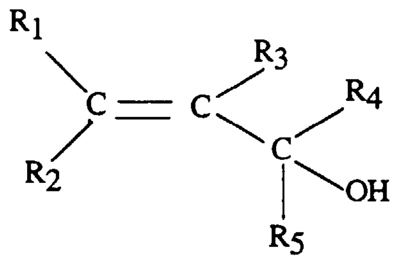

(III)

dans laquelle $R_4$ et $R_5$ désignent hydrogène ou bien l'un des groupements $R_4$ ou $R_5$ est un atome d'hydrogène tandis que l'autre forme avec le groupement $R_2$ un cycle en $C_5$ ou en $C_7$-$C_{10}$ éventuellement substitué par un ou plusieurs groupement(s) alkyle en $C_1$-$C_4$, linéaire(s) ou ramifié(s);
$R_1$, $R_2$ et $R_3$ sont choisis, indépendamment l'un de l'autre, parmi l'atome d'hydrogène, les groupements alkyle en $C_1$-$C_6$, pouvant être substitué(s) par un ou plusieurs groupement(s) OH et dont la chaîne peut éventuellement être interrompue par un ou plusieurs groupement(s) éther, ester ou cétonique.

**2.** Composition polymère selon la revendication 1, caractérisée par le fait que le composant A comprend un monomère ou un mélange de monomères répondant à la formule :

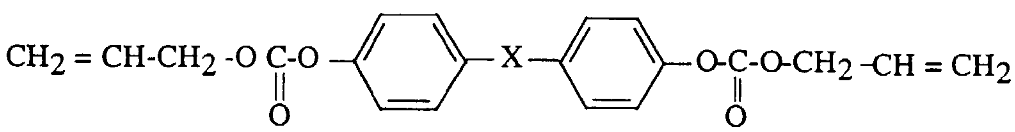

(I')

où X a les mêmes significations indiquées dans la revendication 1.

**3.** Composition polymère selon la revendication 1 ou 2 caractérisée par le fait qu'elle comprend 70 à 100% en poids de composé de formule (I) ou (I') par rapport au poids du composant A.

**4.** Composition polymère selon l'une quelconque des revendications 1 à 3, caractérisée par le fait que dans la formule (I), X désigne :

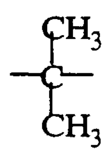

**5.** Composition polymère selon l'une quelconque des revendications 1 à 4, caractérisée par le fait que le monomère de formule (III) est choisi parmi ceux pour lesquels $R_4$ et $R_5$ désignent hydrogène.

**6.** Composition polymère selon l'une quelconque des revendications 1 à 5, caractérisée par le fait que le monomère de formule (III) est choisi parmi ceux pour lesquels $R_3$, $R_4$ et $R_5$ désignent hydrogène; $R_1$ désigne hydrogène, méthyle ou propyle; $R_2$ désigne hydrogène, méthyle, éthyle ou propyle.

**7.** Composition polymère selon la revendication 6, caractérisée par le fait que le monomère de formule (III) est choisi parmi le cis 2-hexène 1-ol, le trans 2-hexène 1-ol, le cis 2-pentène 1-ol, l'alcool crotylique, le 3-méthyl 2-butène 1-ol.

**8.** Composition polymère selon l'une quelconque des revendications 1 à 6, caractérisée par le fait que les monomères (II) sont des composés aromatiques monofonctionnels choisis parmi le phényl(méth)acrylate, le benzyl(méth) acrylate, le phénoxyéthyl(méth)acrylate, le styrène ou des composés non-aromatiques choisis parmi les alkyl (méth)acrylates monofonctionnels, bifonctionnels ou trifonctionnels ou les diallylcarbonates de glycols.

**9.** Composition polymère selon la revendication 7, caractérisée par le fait que le monomère (II) est le diallylcarbonate de diethylèneglycol.

**10.** Composition polymère selon l'une quelconque des revendications 1 à 8, caractérisée par le fait que le composé de formule (I) est le diallylcarbonate de bisphénol A.

**11.** Composition polymérisable pour lentille caractérisée par le fait qu'elle comprend

(A) au moins 50 % en poids d'un monomère ou d'un mélange de monomères répondant à la formule (I) :

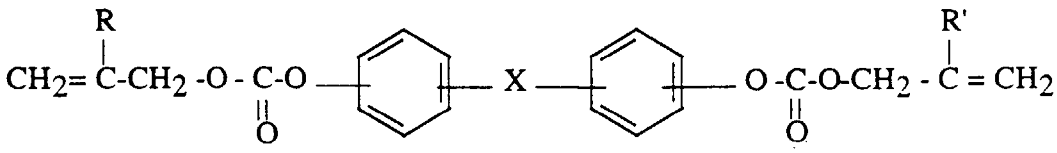

(I)

dans laquelle X désigne :
O,S, $SO_2$, -CO,-$CH_2$-, -CH=CH- ou

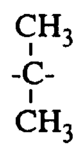

et R et R' sont choisis parmi H et $CH_3$ ;
0 à 50 % en poids d'un ou plusieurs comonomères allyliques(s) vinylique(s) acrylique(s) ou méthacrylique(s) mono ou poly fonctionnel(s) (II)
(B) un composant B comprenant de
0,2 à 10 % en poids, de préférence 0,3 à 5 % en poids, par rapport au poids des composants (I) et (II), d'un composé de formule (III)

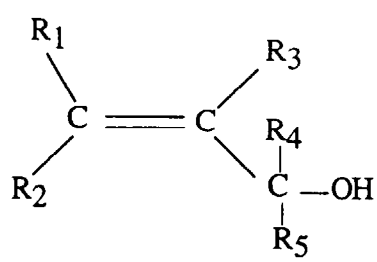

(III)

dans laquelle $R_4$ et $R_5$ désignent hydrogène ou bien l'un des radicaux $R_4$ ou $R_5$ est un atome d'hydrogène tandis que l'autre forme avec $R_2$ un cycle en $C_5$ ou en $C_7$-$C_{10}$ éventuellement substitué par un ou plusieurs groupements aLkyle en $C_1$-$C_4$, linéaire(s) ou ramifié(s); $R_1$, $R_2$ et $R_3$ sont choisis, indépendamment l'un de l'autre, parmi l'atome d'hydrogène, les groupements alkyle en $C_1$-$C_6$, pouvant être substitué(s) par un ou plusieurs groupement(s) OH et dont la chaîne peut éventuellement être interrompue par un ou plusieurs groupement(s) éther, ester ou cétonique.

**12.** Composition polymérisable selon la revendication 11, caractérisée par le fait que le composant A comprend un monomère ou un mélange de monomères répondant à la formule :

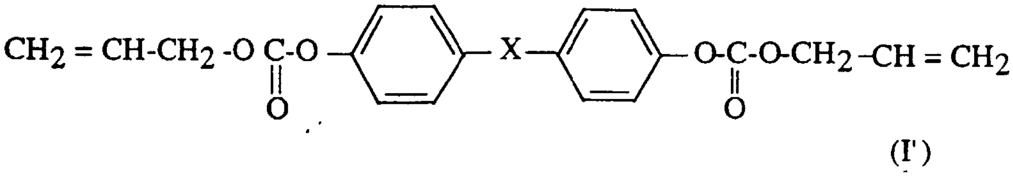

(I')

où X a les mêmes significations indiquées dans la revendication 1.

**13.** Composition polymérisable selon la revendication 12, caractérisée par le fait que le monomère de formule (III) est choisi parmi ceux pour lesquels $R_4$ et $R_5$ désignent l'hydrogène.

**14.** Composition polymérisable selon la revendication 12 ou 13, caractérisée par le fait que le monomère de formule (III) est choisi parmi ceux pour lesquels $R_3$, $R_4$, et $R_5$ désignent hydrogène; $R_1$ désigne hydrogène, méthyle ou propyle; $R_2$ désigne hydrogène, méthyle, éthyle ou propyle.

**15.** Composition polymérisable selon la revendication 13, caractérisée par le fait que le monomère de formule (III) est choisi parmi l'alcool crotylique, le cis 2-hexène 1-ol, le trans 2-hexène 1-ol, le cis 2-pentène 1-ol, le 3-méthyl 2-butène 1-ol.

**16.** Procédé de préparation de la composition polymère définie dans l'une quelconque des revendications 1 à 10, caractérisé par le fait que l'on mélange le ou les monomères (I) et (II) en présence d'un amorceur ou catalyseur de polymérisation et qu'on ajoute 0,2 à 10 % en poids par rapport au poids des monomères de formule (I) et (II), d'un dérivé d'alcool allylique répondant à la formule (III) :

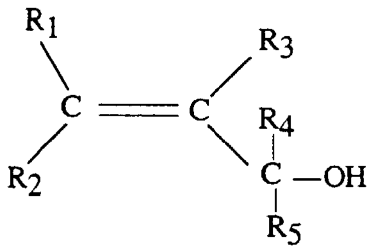

(III)

dans laquelle $R_4$ et $R_5$ désignent hydrogène, ou bien l'un des groupements $R_4$ et $R_5$ désigne hydrogène et l'autre forme avec le groupement $R_2$ un cycle en $C_5$ ou en $C_7$-$C_{10}$; $R_1$, $R_2$ et $R_3$ sont choisis indépendamment l'un de l'autre parmi l'atome d'hydrogène, les groupements alkyle en $C_1$-$C_6$, pouvant être substitué(s) par un ou plusieurs groupement(s) OH et dont la chaîne peut éventuellement être interrompue par un ou plusieurs groupement(s) éther, ester ou cétonique et que l'on procède à la polymérisation.

**17.** Procédé de préparation de la composition polymère définie dans l'une quelconque des revendications 1 à 10, caractérisé par le fait que l'on procède à la polymérisation de la composition polymérisable selon l'une quelconque des revendications 11 à 15, par voie photochimique.

**18.** Procédé de fabrication d'une lentille finie ou semi-finie, caractérisé par le fait que l'on procède à la coulée de la composition polymérisable selon l'une quelconque des revendications 11 à 15 entre deux moules présentant les géométries de surface requises puis que l'on procède à la polymérisation telle que définie dans la revendication 16 ou 17, suivie d'un recuit.

**19.** Lentille ophtalmique constituée par une composition polymère selon l'une quelconque des revendications 1 à 10.

**20.** Lentille ophtalmique susceptible d'être obtenue selon le procédé défini selon la revendication 18.

**21.** Utilisation de la composition polymère selon l'une quelconque des revendications 1 à 10, pour la fabrication de lentilles ophtalmiques ou de lentilles destinées à des viseurs ou des optiques d'appareils.

**22.** Utilisation d'une lentille telle que définie dans la revendication 19 ou 20, pour la fabrication de verres pour lunettes ou pour des applications optiques diverses.

**23.** Verre de lunettes caractérisé par le fait qu'il est constitué d'une lentille telle que définie dans la revendication 19 ou 20.

**24.** Objectif caractérisé par le fait qu'il comprend au moins une lentille telle que définie dans l'une quelconque des revendications 19 ou 20.

**Patentansprüche**

**1.** Polymerzusammensetzung, dadurch gekennzeichnet, daß sie aus der Polymerisation einer polymerisierbaren Zusammensetzung resultiert umfassend:

(A) eine Komponente A, umfassend: mindestens 50 Gew.-% eines Monomeren oder einer Monomerenmischung, welche der Formel (I)

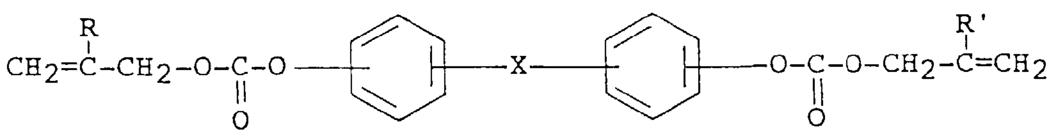

(I)

genügt, in welcher X

O, S, $SO_2$, -CO, $-CH_2-$, -CH=CH- oder

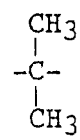

bedeutet und R und R' aus H und $CH_3$ gewählt sind;
0 bis 50 Gew.-% von einem oder mehreren allylischen, vinylischen, acrylischen oder methacrylischen, mono- oder polyfunktionellen Comonomeren (II);
(B) eine Komponente B, umfassend:
von 0,2 bis 10 Gew.-%, vorzugsweise 0,3 bis 5 Gew.-%, in bezug auf das Gewicht der Komponenten (I) und (II), einer Verbindung der Formel (III)

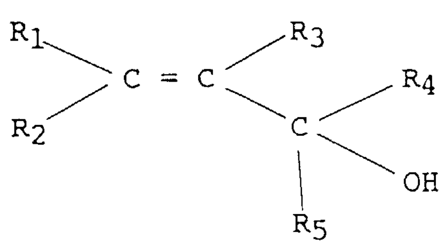

(III)

in welcher

$R_4$ und $R_5$ Wasserstoff bedeuten oder wenigstens eine der Gruppen $R_4$ oder $R_5$ ein Wasserstoffatom bedeuten, während die andere mit der Gruppe $R_2$ einen $C_5$- oder $C_7$-$C_{10}$-Ring bildet, welcher gegebenenfalls durch eine

oder mehrere geradkettige oder verzweigte $C_1$-$C_4$-Alkylgruppe(n) substituiert ist; $R_1$, $R_2$ und $R_3$ unabhängig voneinander aus dem Wasserstoffatom, den $C_1$-$C_6$-Alkylgruppen, welche durch eine oder mehrere OH-Gruppen substituiert sein können und deren Kette gegebenenfalls durch eine oder mehrere Ether-, Ester- oder Ketongruppen unterbrochen sein kann, gewählt ist.

2. Polymerzusammensetzung nach Anspruch 1, dadurch gekennzeichnet, daß die Komponente A ein Monomer oder eine Monomerenmischung umfaßt, welche der Formel

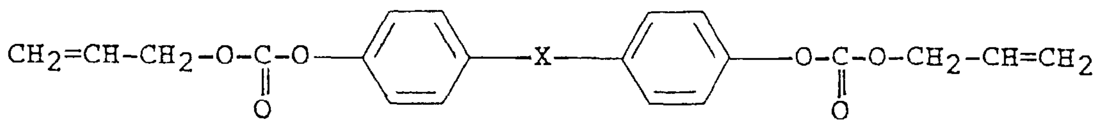

(I')

genügt, worin X dieselben Bedeutungen, wie in Anspruch 1 angegeben, besitzt.

3. Polymerzusammensetzung nach Anspruch 1 oder 2, dadurch gekennzeichnet, daß sie 70 bis 100 Gew.-% der Verbindung der Formel (I) oder (I') in bezug auf das Gewicht der Komponente A enthält.

4. Polymerzusammensetzung nach einem der Ansprüche 1 bis 3, dadurch gekennzeichnet, daß in der Formel (I) X

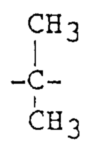

bedeutet.

5. Polymerzusammensetzung nach einem der Ansprüche 1 bis 4, dadurch gekennzeichnet, daß das Monomer der Formel (III) unter jenen, für welche $R_4$ und $R_5$ Wasserstoff bedeuten, gewählt ist.

6. Polymerzusammensetzung nach einem der Ansprüche 1 bis 5, dadurch gekennzeichnet, daß das Monomer der Formel (III) unter jenen gewählt ist, für welche $R_3$, $R_4$ und $R_5$ Wasserstoff bedeuten; $R_1$ Wasserstoff, Methyl oder Propyl bedeutet; $R_2$ Wasserstoff, Methyl, Ethyl oder Propyl bedeutet.

7. Polymerzusammensetzung nach Anspruch 6, dadurch gekennzeichnet, daß das Monomer der Formel (III) unter cis-2-Hexen-1-ol, trans-2-Hexen-1-ol, cis-2-Penten-1-ol, Crotylalkohol, 3-Methyl-2-buten-1-ol gewählt ist.

8. Polymerzusammensetzung nach einem der Ansprüche 1 bis 6, dadurch gekennzeichnet, daß die Monomeren (II) monofunktionelle, aromatische Verbindungen, gewählt aus Phenyl(meth)acrylat, Benzyl(meth)acrylat, Phenoxyethyl(meth)acrylat, Styrol, oder nicht-aromatische Verbindungen sind, gewählt aus den monofunktionellen, bifunktionellen oder trifunktionellen Alkyl(meth)acrylaten oder den Glykoldiallylcarbonaten.

9. Polymerzusammensetzung nach Anspruch 7, dadurch gekennzeichnet, daß das Monomer (II) das Diethylenglykoldiallylcarbonat ist.

10. Polymerzusammensetzung nach einem der Ansprüche 1 bis 8, dadurch gekennzeichnet, daß die Verbindung der Formel (I) das Bisphenol-A-diallylcarbonat ist.

11. Polymerisierbare Zusammensetzung für eine Linse, dadurch gekennzeichnet, daß sie umfaßt:

(A) mindestens 50 Gew.-% eines Monomeren oder einer Monomerenmischung, welche der Formel (I)

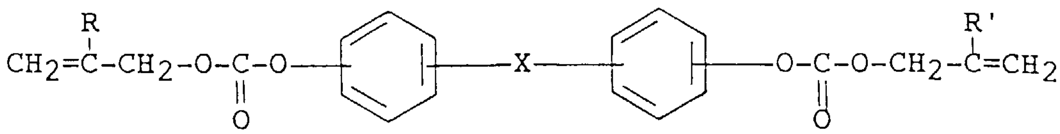

(I)

genügt, in welcher X

O, S, $SO_2$, -CO, $-CH_2-$, -CH=CH- oder

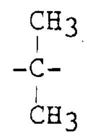

bedeutet und R und R' aus H und $CH_3$ gewählt sind;

0 bis 50 Gew.-% von einem oder mehreren allylischen, vinylischen, acrylischen oder methacrylischen, mono- oder polyfunktionellen Comonomeren (II);

(B) eine Komponente B, umfassend

0,2 bis 10 Gew.-%, vorzugsweise 0,3 bis 5 Gew.-%, in bezug auf das Gewicht der Komponenten (I) und (II), einer Verbindung der Formel (III)

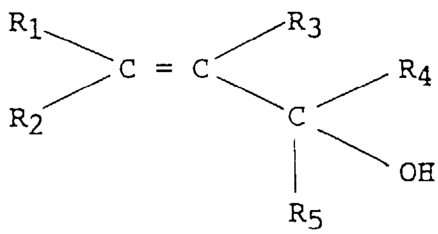

(III)

in welcher

$R_4$ und $R_5$ Wasserstoff bedeuten oder wenigstens einer der Reste $R_4$ oder $R_5$ ein Wasserstoffatom bedeutet, während der andere mit $R_2$ einen $C_5$- oder $C_7$-$C_{10}$-Ring bildet, welcher gegebenenfalls durch eine oder mehrere geradkettige oder verzweigte $C_1$-$C_4$-Alkylgruppen substituiert ist;

$R_1$, $R_2$ und $R_3$ unabhängig voneinander aus dem Wasserstoffatom, den $C_1$-$C_6$-Alyklgruppen, welche durch eine oder mehrere OH-Gruppen substituiert sein können, gewählt ist und deren Kette gegebenenfalls durch eine oder mehrere Ether-, Ester- oder Ketongruppen unterbrochen sein kann.

**12.** Polymerisierbare Zusammensetzung nach Anspruch 11, dadurch gekennzeichnet, daß die Komponente A ein Monomer oder eine Monomerenmischung umfaßt, welche der Formel:

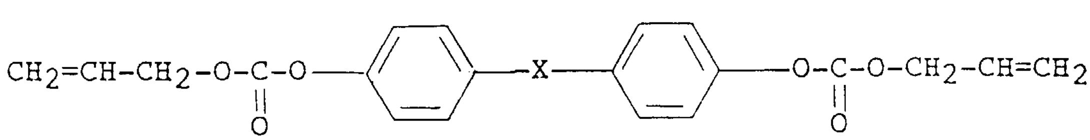

(I')

genügt, worin X dieselben Bedeutungen, wie in Anspruch 1 angegeben, besitzt.

**13.** Polymerisierbare Zusammensetzung nach Anspruch 12, dadurch gekennzeichnet, daß das Monomer der Formel

(III) unter jenen, für welche $R_4$ und $R_5$ Wasserstoff bedeuten, gewählt ist.

**14.** Polymerzusammensetzung nach Anspruch 12 oder 13, dadurch gekennzeichnet, daß das Monomer der Formel (III) unter jenen gewählt ist, für welche $R_3$, $R_4$ und $R_5$ Wasserstoff bedeuten; $R_1$ Wasserstoff, Methyl oder Propyl bedeutet; $R_2$ Wasserstoff, Methyl, Ethyl oder Propyl bedeutet.

**15.** Polymerzusammensetzung nach Anspruch 13, dadurch gekennzeichnet, daß das Monomer der Formel (III) aus Crotylalkohol, cis-2-Hexen-1-ol, trans-2-Hexen-1-ol, cis-2-Penten-1-ol, 3-Methyl-2-buten-1-ol gewählt ist.

**16.** Verfahren zur Herstellung der Polymerzusammensetzung, welche in einem der Ansprüche 1 bis 10 definiert ist, dadurch gekennzeichnet, daß das oder die Monomeren (I) und (II) in Gegenwart eines Starters oder Polymerisationskatalysators vermischt werden und daß 0,2 bis 10 Gew.-% in bezug auf das Gewicht der Monomeren der Formel (I) und (II) eines Allylalkoholderivats zugesetzt werden, welches der Formel (III)

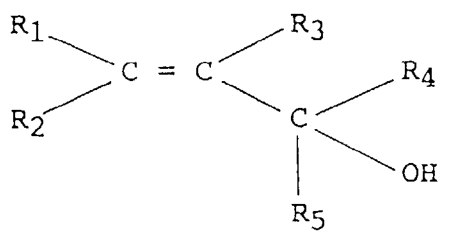

(III)

genügt, in welcher

$R_4$ und $R_5$ Wasserstoff bedeuten oder wenigstens eine der Gruppen $R_4$ und $R_5$ ein Wasserstoffatom bedeutet, während die andere mit der Gruppe $R_2$ einen $C_5$- oder $C_7$-$C_{10}$-Ring bildet;
$R_1$, $R_2$ und $R_3$ unabhängig voneinander aus dem Wasserstoffatom, den $C_1$-$C_6$-Alyklgruppen, welche durch eine oder mehrere OH-Gruppen substituiert sein können und deren Kette gegebenenfalls durch eine oder mehrere Ether-, Ester- oder Ketongruppen unterbrochen sein kann, gewählt sind,

und daß die Polymerisation fortgeführt wird.

**17.** Verfahren zur Herstellung der Polymerzusammensetzung, welche in einem der Ansprüche 1 bis 10 definiert ist, dadurch gekennzeichnet, daß die Polymerisation der polymerisierbaren Zusammensetzung nach einem der Ansprüche 11 bis 15 auf fotochemischem Weg fortgeführt wird.

**18.** Verfahren zur Herstellung einer fertigen oder halbfertigen Linse, dadurch gekennzeichnet, daß ein Gießen der polymerisierbaren Zusammensetzung nach einem der Ansprüche 11 bis 15 zwischen zwei Formen, welche die erforderlichen Oberflächengeometrien aufweisen, vorgenommen wird und daß die Polymerisation, wie in den Ansprüchen 16 oder 17 definiert, gefolgt von einem Härten durchgeführt wird.

**19.** Ophthalmische Linse, bestehend aus einer Polymerzusammensetzung nach einem der Ansprüche 1 bis 10.

**20.** Ophthalmische Linse, welche nach dem in Anspruch 18 definierten Verfahren erhalten werden kann.

**21.** Verwendung der Polymerzusammensetzung nach einem der Ansprüche 1 bis 10 zur Herstellung von ophthalmischen Linsen oder Linsen, welche für Sucher oder optische Apparate bestimmt sind.

**22.** Verwendung einer Linse, wie sie in den Ansprüchen 19 oder 20 definiert ist, zur Herstellung von Gläsern für Brillen oder für verschiedene optische Anwendungen.

**23.** Brillenglas, dadurch gekennzeichnet, daß es aus einer Linse besteht, welche wie in Anspruch 19 oder 20 definiert ist.

**24.** Objektiv, dadurch gekennzeichnet, daß es mindestens eine Linse enthält, welche wie in Anspruch 19 oder 20 definiert ist.

**Claims**

1. Polymer composition characterized in that it results from the polymerization of a polymerizable composition including:

   (A) a component A including: at least 50 % by weight of a monomer or of a mixture of monomers corresponding to the formula I

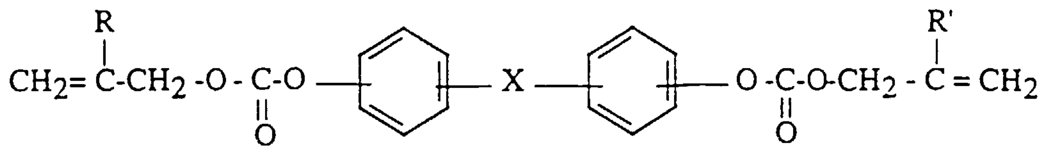

(I)

in which

X denotes

O,S, $SO_2$, -CO,-$CH_2$-, -CH=CH- or

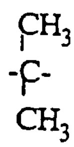

and R and R' are chosen from H and $CH_3$;

0 to 50 % by weight of one or more allyl vinyl, acrylic or methacrylic mono- or polyfunctional comonomer(s) (II)

(B) a component B including from

0.2 to 10 % by weight, preferably 0.3 to 5 % by weight relative to the weight of the components (I) and (II), of a compound of formula (III):

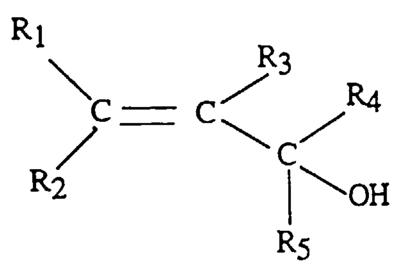

(III)

in which $R_4$ and $R_5$ denote hydrogen or else one of the groups $R_4$ or $R_5$ is a hydrogen atom while the other forms with the group $R_2$ a $C_5$ or $C_7$-$C_{10}$ ring optionally substituted by one or several linear or branched $C_1$-$C_4$ alkyl group (s);

$R_1$, $R_2$ and $R_3$ are chosen, independently of one another, from the hydrogen atom, and $C_1$-$C_6$ alkyl groups which may be substituted by one or more OH group(s) and the chain of which may optionally be interrupted by one or more ether, ester or ketonic group(s).

2. Polymer composition according to Claim 1, characterized in that the component A includes a monomer or a mixture of monomers corresponding to the formula:

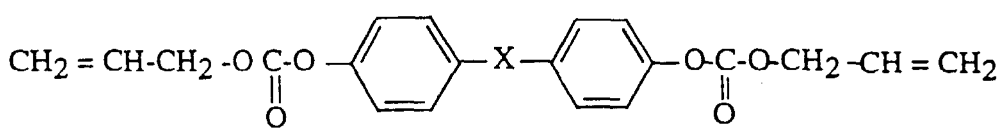

(I')

where X has the same meanings shown in Claim 1.

3. Polymer composition according to Claim 1 or 2, characterized in that it includes 70 to 100 % by weight of compound of formula (I) or (I') relative to the weight of the component A.

4. Polymer composition according to any one of Claims 1 to 3, characterized in that in the formula (I), X denotes:

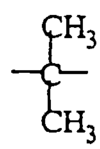

5. Polymer composition according to any one of Claims 1 to 4, characterized in that the monomer of formula (III) is chosen from those in the case of which $R_4$ and $R_5$ denote hydrogen.

6. Polymer composition according to any one of Claims 1 to 5, characterized in that the monomer of formula (III) is chosen from those in the case of which $R_3$, $R_4$ and $R_5$ denote hydrogen, $R_1$ denotes hydrogen, methyl or propyl and $R_2$ denotes hydrogen, methyl, ethyl or propyl.

7. Polymer composition according to Claim 6, characterized in that the monomer of formula (III) is chosen from cis-2-hexen-1-ol, trans-2-hexen-1-ol, cis-2-penten-1-ol, crotyl alcohol and 3-methyl-2-buten-1-ol.

8. Polymer composition according to any one of Claims 1 to 6, characterized in that the monomers (II) are monofunctional aromatic compounds chosen from phenyl (meth)acrylate, benzyl (meth)acrylate, phenoxyethyl (meth) acrylate, styrene or nonaromatic compounds chosen from monofunctional, difunctional or trifunctional alkyl (meth) acrylates or glycol diallyl carbonates.

9. Polymer composition according to Claim 7, characterized in that the monomer (II) is diethylene glycol diallyl carbonate.

10. Polymer composition according to any one of Claims 1 to 8, characterized in that the compound of formula (I) is bisphenol A diallyl carbonate.

11. Polymerizable composition for a lens, characterized in that it includes

(A) at least 50 % by weight of a monomer or of a mixture of monomers corresponding to the formula (I):

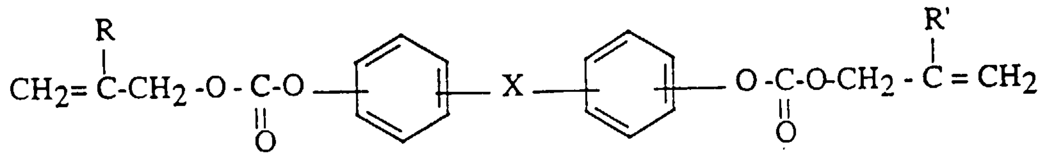

(I)

in which X denotes

$O, S, SO_2, -CO, -CH_2-, -CH{=}CH-$ or

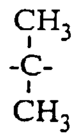

and R and R' are chosen from H and $CH_3$;

0 to 50 % by weight of one or more allyl vinyl, acrylic or methacrylic mono- or polyfunctional comonomer(s) (II)

(B) a component B including from

0.2 to 10 % by weight, preferably 0.3 to 5 % by weight, relative to the weight of the components (I) and (II), of a compound of formula (III)

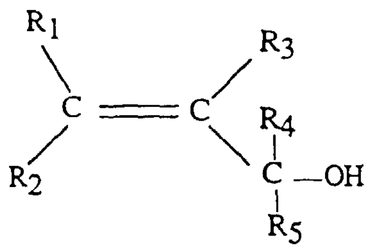

(III)

in which $R_4$ and $R_5$ denote hydrogen or else one of the radicals $R_4$ or $R_5$ is a hydrogen atom while the other forms with $R_2$ a $C_5$ or $C_7$-$C_{10}$ ring optionally substituted by one or several linear or branched $C_1$-$C_4$ alkyl group(s); $R_1$, $R_2$ and $R_3$ are chosen, independently of one another, from the hydrogen atom and $C_1$-$C_6$ alkyl groups which may be substituted by one or more OH group(s) and the chain of which may optionally be interrupted by one or more ether, ester or ketonic group(s).

**12.** Polymerizable composition according to Claim 11, characterized in that the component A includes a monomer or a mixture of monomers corresponding to the formula:

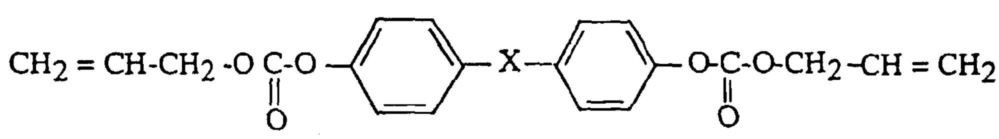

(I')

where X has the same meanings shown in Claim 1.

**13.** Polymerizable composition according to Claim 12, characterized in that the monomer of formula (III) is chosen from those in the case of which $R_4$ and $R_5$ denote hydrogen.

**14.** Polymerizable composition according to Claim 12 or 13, characterized in that the monomer of formula (III) is chosen from those in the case of which $R_3$, $R_4$ and $R_5$ denote hydrogen, $R_1$ denotes hydrogen, methyl or propyl and $R_2$ denotes hydrogen, methyl, ethyl or propyl.

**15.** Polymerizable composition according to Claim 13, characterized in that the monomer of formula (III) is chosen from crotyl alcohol, cis-2-hexen-1-ol, trans-2-hexen-1-ol, cis-2-penten-1-ol and 3-methyl-2-buten-1-ol.

**16.** Process for the preparation of the polymer composition defined in any one of Claims 1 to 10, characterized in that the monomer(s) (I) and (II) is (are) mixed in the presence of a polymerization initiator or catalyst and in that there is added 0.2 to 10 % by weight, relative to the weight of the monomers of formula (I) and (II), of an allyl alcohol

derivative corresponding to the formula (III):

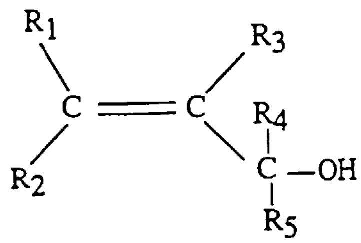

(III)

in which $R_4$ and $R_5$ denote hydrogen or else one of the groups $R_4$ and $R_5$ denotes hydrogen and the other forms with the group $R_2$ a $C_5$ or $C_7$-$C_{10}$ ring, $R_1$, $R_2$ and $R_3$ are chosen independently of one another from the hydrogen atom and $C_1$-$C_6$ alkyl groups which may be substituted by one or more OH group(s) and the chain of which may optionally be interrupted by one or more ether, ester or ketonic group(s) and that the polymerization is undertaken.

**17.** Process for the preparation of the polymer composition defined in any one of Claims 1 to 10, characterized in that the polymerization of the polymerizable composition according to any one of Claims 11 to 15 is undertaken by a photochemical route.

**18.** Process for the manufacture of a finished or semifinished lens, characterized in that the casting of the polymerizable composition according to any one of Claims 11 to 15 is undertaken between two moulds exhibiting the required surface geometries and in that the polymerization as defined in Claim 16 or 17 is then undertaken, followed by an annealing.

**19.** Ophthalmic lens consisting of a polymer composition according to any one of Claims 1 to 10.

**20.** Ophthalmic lens capable of being obtained according to the process defined according to Claim 18.

**21.** Use of the polymer composition according to any one of Claims 1 to 10 for the manufacture of ophthalmic lenses or of lenses intended for viewfinders or instrument optics.

**22.** Use of a lens as defined in Claim 19 or 20 for the manufacture of glasses for spectacles or for various optical applications.

**23.** Spectacle glass characterized in that it consists of a lens as defined in Claim 19 or 20.

**24.** Objective characterized in that it includes at least one lens as defined in either of Claims 19 and 20.